# EUROPEAN PATENT SPECIFICATION

(11) **EP 1 106 409 B1**
(45) Date of publication and mention of the grant of the patent: **21.06.2006**
(21) Application number: 00660226.2
(22) Date of filing: 08.12.2000
(51) Int. Cl.: B60J 7/10

(54) **Cover frame and cover frame support member**
Abdeckungsrahmen und Trägerelement für Abdeckungsrahmen
Cadre de couverture et élément de support pour cadre de couverture

(30) Priority: 09.12.1999 FI 992649
(43) Date of publication of application: 13.06.2001
(73) Proprietor: Oy Närko Ab, 64200 Närpiö (FI)
(72) Inventor: Äystö, Jussi, 64770 Äystö (FI)
(74) Representative: Roitto, Klaus

(56) References cited:
- EP-A- 0 897 827
- SE-B- 468 279
- US-A- 5 474 354

## Description

### BACKGROUND OF THE INVENTION

The invention relates to a cover frame for supporting a tarpaulin for vehicles, particularly lorries and trailers, the cover frame comprising an upper level comprising transverse support members and longitudinal support members, some of the longitudinal support members being arranged in the edge area of the upper level and others in the middle area of the upper level, wherein at least one support member comprises a ridge protruding above the upper level of the cover frame when the support member is in a second position, the plane defined by the ridge being at an angle with respect to the upper level of the cover frame.

The word "vehicle" herein thus refers to a trailer as well.

The invention further relates to a cover frame support member, the cover frame supporting a tarpaulin for vehicles, particularly lorries and trailers, and comprising an upper level comprising longitudinal support members and transverse support members, a support member comprising a ridge which can be arranged into a second position with respect to the cover frame where it supports the tarpaulin from below, the plane defined by the ridge being at an angle with respect to the upper level of the cover frame, whereby the ridge protrudes above the upper level of the cover frame.

In lorries and trailers, the cargo compartment can be defined by fixed, i.e. closed, walls and a fixed, i.e. closed, roof. Alternatively, the cargo compartment may be open, defined by a cover frame. The present invention relates to a cover frame. The cover frame provides a supporting framework for a tarpaulin. In lorries and trailers thereof, the cover frame typically comprises pillars on which an upper level, i.e. a roof structure, is supported. The upper level comprises horizontal profile members, tubes or bars or profiles arranged both transversely (roof trusses) and longitudinally in a vehicle in order to form frameworks that define rectangular areas.

After the tarpaulin has been arranged on the cover frame, the tarpaulin is supported only at the tubes, bars and profiles. This means that within the rectangular frames of the upper level, areas exist where the tarpaulin is not being supported from below. These areas collect rainwater and snow, causing the tarpaulin to sink in at these places, which means that pools will occur therein. In winter, the water and snow freeze. When the vehicle is moving, the tarpaulin is subjected to inertial forces (accelerative, braking and centrifugal forces) and wind forces which cause the ice and snow in these depressions to come off the tarpaulin and become thrown on the road. On many occasions, even large blocks of ice will form which cause dangerous situations in traffic. An ice block has a great impact force, so it can easily break the windscreen of an adjacent vehicle. Naturally, the ice and snow may also cause damage and even death among pedestrians, bikers and motorists as well.

In order to alleviate the present problem, it is known to arrange several planks or boards in a vertical position at different points of the cargo compartment, the planks or boards being supported against the floor of the cargo compartment and lifting the tarpaulin locally. This is extremely laborious and not even always possible if the cargo in the cargo compartment is in the way. Alternatively, before starting off with the vehicle, the tarpaulin may be hit e.g. with long planks from below inside the cargo compartment so that ice and the snow come off. It is, however, extremely laborious and sometimes impossible to remove the ice and snow in the above-described manner. Planks or boards are also used before starting off for lifting the tarpaulin locally to remove water. In addition to the above-described methods, ice and snow or water can be removed from above by someone on top of the cover frame.

It is thus quite difficult and laborious to remove the ice, snow and water in the known manner. Consequently ice, snow and water are not removed as thoroughly and as often as would be necessary in order to avoid accident.

SE 502 642, which comprises the features mentioned in the preamble of claims 1 and 11, discloses a device for removing ice from tarpaulins for vehicles, such as lorries and trailers. The device comprises a stiff reinforcing bar on which a bar movable in a vertical direction is supported for lifting the tarpaulin in the middle such that the tarpaulin is provided with a ridge from which two downward inclining planes extend that are formed by the tarpaulin. The bar is movable by a hydraulic cylinder or by a combination of an electric motor and gear, in which case the piston of the hydraulic cylinder or the gear of the electric motor is on one hand mounted by levers to the reinforcing bar and on the other hand to the movable bar. In order to operate, the device requires a hydraulic system or a power source which are not always available: for example, a trailer separate from the tractor vehicle does not comprise a working hydraulic or electric system. Furthermore, when the system used is a hydraulic system, the device requires one or more hydraulic tubes to be in-stalled on the roof level of the vehicle. In view of the above, the device has a relatively complex structure and is not always ready to be used.

DE 28 20 677 discloses a frame structure of a vehicle, the frame structure comprising arms arranged in the longitudinal direction of the vehicle which are turnable in the transverse direction thereof. The arms can be turned from a position where they support a tarpaulin on the lateral sides of the vehicle into a position where they lift the tarpaulin on the roof level of the vehicle upwards in order to form a ridge in the tarpaulin. The arms are turned using a manual mechanism. When turned down, the arms do not support the upper level of the tarpaulin at all. It takes a lot of empty cargo space to turn the arms, which reduces the effective cargo space of the vehicle.

### BRIEF DESCRIPTION OF THE INVENTION

An object of the present invention is thus to provide an improved, simple and easy-to-use way to alleviate the aforementioned problems.

To enable this, the cover frame of the invention is characterized in that the ridge of the support member is alternatively movable by means of a bearing into a first position where the plane defined by the ridge is substantially parallel with respect to the upper level of the cover frame, or into said second position where the ridge protrudes above the upper level of the cover frame, the plane defined by the ridge being at an angle with respect to the upper level of the cover frame.

Thanks to the ridge in the support member, the tarpaulin is thus lifted up, which prevents pools from occurring.

Preferably, said at least one support member comprises an opposite ridge arranged in the opposite direction to that of the ridge with respect to the longitudinal axis of the support frame such that the plane defined by the opposite ridge is substantially parallel with respect to the plane defined by the ridge. A great advantage of such a structure is that the support member is dynamically balanced with respect to its rotation axis, in which case e.g. gravity is not to turn the support member when it is arranged into a position where the plane defined by its ridges is parallel with respect to the upper level of the cover frame, or alternatively, into a position where the plane defined by the ridges is at an angle with respect to the upper level of the cover frame. Another advantage of the opposite ridge is that it increases the supporting surface for the tarpaulin, and a further advantage is that the opposite ridge provides a simple tool for turning the support member.

A bent, bar-like element forms an extremely simple and functional support member.

Preferred embodiments of the cover frame of the invention are disclosed in attached claims 2 to 10.

The support member of the cover frame of the invention is characterized by comprising a bearing for attaching the support member to the cover frame such that the ridge is alternatively movable into a first position where the plane defined by the ridge is substantially parallel with respect to the upper level of the cover frame, or into said second position where the ridge protrudes above the upper level of the cover frame, the plane defined by the ridge being at an angle with respect to the upper level of the cover frame. The ridge lifts the tarpaulin above the upper level of the cover frame such that the tarpaulin is provided with a slope to prevent water and snow from being collected onto the tarpaulin.

The greatest advantages of the cover frame and support member of the invention are that they prevent water, snow and ice from being collected onto the tarpaulin; they alleviate removal of the water and snow possibly collected onto the tarpaulin therefrom; when the tarpaulin is arranged horizontally, they support the tarpaulin properly; they have a simple structure; and when in use, they hardly - at least in practice - require the effective cargo space of a vehicle to be reduced. The cover frame is easy to use for the aforementioned purposes, which makes it less probable that harmful water, snow and ice will be collected onto the tarpaulin. The application of the invention to existing cover frames requires only extremely slight modifications to the cover frames.

### BRIEF DESCRIPTION OF THE DRAWINGS

The invention is now described in closer detail by means of a preferred embodiment and with reference to the accompanying drawing, in which
Figure 1 shows a cover frame structure of the invention,
Figure 2 shows an essential component of the cover frame structure and how the component is attached to the cover frame, and
Figure 3 shows the attachment of the component of Figure 2 to the cover frame.

### DETAILED DESCRIPTION OF THE INVENTION

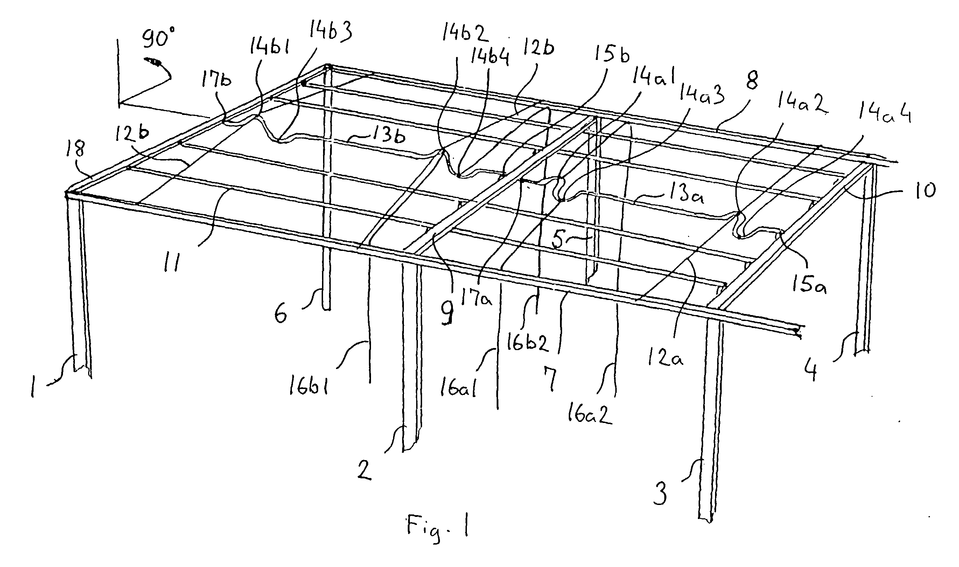

Figure 1 illustrates the structure of a cover frame for a lorry; for the sake of clarity, the cover frame is shown incomplete.

The cover frame comprises vertical pillars 1 to 6. Upper profile members 7 and 8 are attached at upper ends of the pillars, and roof trusses 9, 10 and 18 are attached transversely with respect to the upper profile members. Between the upper profile members 7, 8 are provided parallel longitudinal straight tubes 11. The tubes 11 and the roof trusses 9, 10, 18 form an upper level of the cover frame (all roof trusses and tubes are not shown in the figure since the front end of the cover frame has been omitted from the figure). The upper level supports a tarpaulin resting on the cover frame; for the sake of simplicity, the tarpaulin is illustrated only by lines 12a and 12b.

The upper level comprises support members 13a and 13b arranged in the middle of the profile members 7, 8. The support members comprise ridges 14a1 to 14a4, 14b1 to 14b4. The plane of the ridges 14a1 to 14a4 of the support member 13a is parallel with the upper level of the cover frame and the tarpaulin 12a, the plane of the ridges being practically the same as the upper level of the cover frame and the plane of the tarpaulin. The support member 13a is in a position herein called a driving position. Thanks to the ridges 14a1 to 14a4, the support member 13a gives a substantially better support to the tarpaulin than the support 11 (tube) without a ridge. The ridges 14b1 to 14b4 of the support member 13b are at a right angle with respect to the upper level of the cover frame. Consequently, the ridges 14b1 and 14b2 lift up the tarpaulin 12b resting on the cover frame above the upper level such that the tarpaulin is provided with a ridge enabling all rainwater to be flowed from the tarpaulin without depressions and pools being formed onto the tarpaulin. The support member 13b can be turned from the position shown in the figure into a position where the planes formed by the ridges 14b1 to 14b4 are parallel with the upper level of the cover frame, corresponding with the position of the support member 13a. Correspondingly, the support member 13a can be turned into a similar position to that of the support member 13b. Owing to the ridges, the shape of the support members 13a, 13b resembles a crankshaft.

To allow the support members 13a, 13b to be turned, they are pivotally mounted to the roof trusses 9, 10, 18. The mounting of the support members 13a, 13b is similar. The ridges 14b3 and 14b4 are directed in the opposite direction to the ridges 14b1 and 14b2 over a similar distance. It can thus be stated that the support member 13b is dynamically in balance. The same applies to the support member 13a. Thanks to the dynamic balance, the support members 13a, 13b remain better in the position where they have been arranged. If the support member 13a lacked the ridges 14a3 and 14a4 and the support member was straight at these points, the support member would turn into a position where the ridges 14a1, 14a2 point downwards unless a relatively strong force were to resist this.

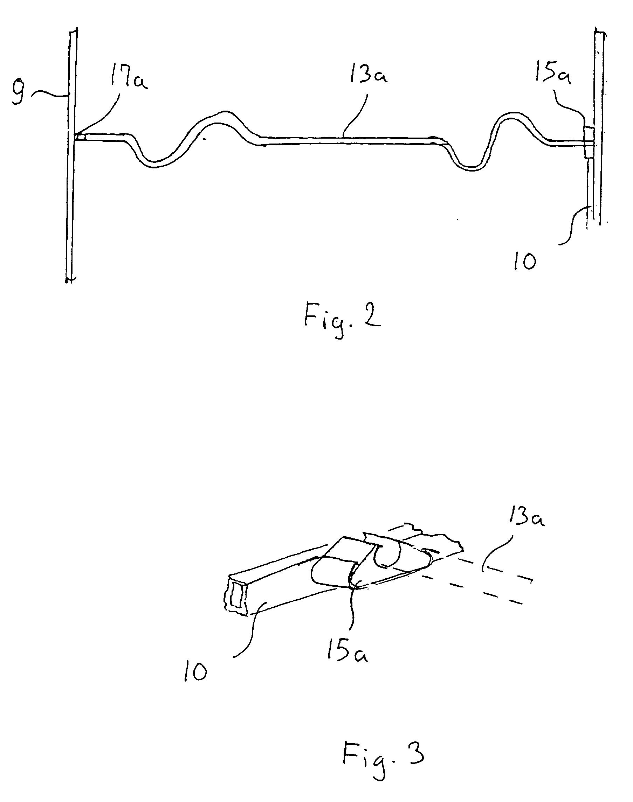

Figures 2 and 3 illustrate how the support member 13a is pivotally mounted. A first end of the support member 13a forms a pin or a short shaft to be received by an aperture 17a in the roof truss 9. The opposite end of the support member is arranged inside an open rubber bearing 15a resting on the roof truss 10. The diameter of the rubber bearing 15a is slightly smaller than the diameter of the support member 13a, which results in a relatively strong friction between the end of the support member and the bearing. Thanks to the friction, the support member 13a will positively stay in the position in which it has been arranged: without a sufficient friction, the support member 13a could rotate due to different external loads to which it inherently would more or less be subjected. The difference in diameter between the support member 13a and the bearing 15a can be used for determining the torsional rigidity of the support and the ridges 14a1 to 14a4 as well. The support member 13b is pivotally mounted in a similar manner, utilizing an aperture 17b and a rubber bearing 15b.

The support members 13a, 13b can be turned (rotated) into the different operating positions shown in Figure 1 e.g. by pushing from below with a plank, a board or another long member. If the support member 13a is to be turned into a similar position to that of the support member 13b, either the ridge 14a3 or 14a4 is pushed upwards. If the support member 13b is to be turned into a similar position to that of the support member 13a, either the ridge 14b3 or 14b4 is pushed obliquely from below.

The support member 13b can be turned into the driving position by pulling a rope 16b1 or 16b2 attached to the ridges 14b2 and 14b4. Alternatively, the ropes 16a1, 16a2, 16b1, 16b2 can be wound around the corresponding bars 13a, 13b or around a belt pulley or a chain wheel arranged therein (not shown), in which case the ridges can also be lifted into a top position. Instead of ropes, another elongated and flexible element, such as a wire or a chain, can be used.

The support members 13a and 13b and the ridges thereof can be easily manufactured by bending a straight tube or bar.

The invention has been described above by means of only one embodiment; therefore, it is to be noted that in its details, the invention can be implemented in many ways within the scope of the attached claims. For example, the number of ridges in the support members may thus vary. In principle even one ridge is enough and the ridge may be elliptical, the long diameter of the ellipsis corresponding with the main direction of the support member. The direction of the support member with one or more ridges may vary with respect to the longitudinal direction of the cover frame; it does not necessarily have to be parallel with the longitudinal direction of the cover frame as shown in the figure but it may, in principle, be transverse with respect to the longitudinal direction of the cover frame, or it can be at another angle. It is most likely, however, that such arrangements are more difficult to implement in practice. The number of support members with one or more ridges may vary. The point at which the support members are pivotally mounted may vary; they do not necessarily have to be located at the ends of the support members and the roof truss although such an arrangement is extremely simple. The ridge does not necessarily have to be an integrated part of the support member but it may be formed by a separate part attached to the support member, e.g. a piece of sheet-like plastic attached to a tube-like support member. The cover frame does not necessarily have to be a frame for a lorry but it may also be a frame for another vehicle, such as a train car.

## Claims

1. A cover frame for supporting a tarpaulin for vehicles, particularly lorries and trailers, the cover frame comprising an upper level comprising transverse support members (9, 10) and longitudinal support members (7, 8, 11, 13a, 13b), some of the longitudinal support members (7, 8) being arranged in the edge area of the upper level and others (11, 13a, 13b) in the middle area of the upper level, wherein at least one support member (13a, 13b) comprises a ridge (14a1, 14b1) protruding above the upper level of the cover frame when the support member is in a second position, the plane defined by the ridge being at an angle with respect to the upper level of the cover frame, **characterized in that** the ridge (14a1, 14b1) of the support member is alternatively movable by means of a bearing (15a, 17a, 15b, 17b) into a first position where the plane defined by the ridge is substantially parallel with respect to the upper level of the cover frame, or into said second position where the ridge protrudes above the upper level of the cover frame and the plane defined by the ridge is at an angle with respect to the upper level of the cover frame.

2. A cover frame as claimed in claim 1, **characterized in that** said at least one support member (13a, 13b) comprises an opposite ridge (14a3, 14b3) arranged in the opposite direction to a ridge (14a1, 14b1) with respect to a longitudinal axis of the support member such that the plane defined by the opposite ridge is substantially parallel with respect to the plane defined by the ridge.

3. A cover frame as claimed in claim 1, **characterized in that** said ridge (14a1, 14b1) is formed in the vicinity of a first end of the support member (13a, 13b), and a ridge (14a2, 14b2) protruding in the same direction with respect to the support member is formed at the opposite end to said end of the support member.

4. A cover frame as claimed in claim 3, **characterized in that** said at least one support member (13a, 13b) comprises opposite ridges (14a3, 14a4, 14b3, 14b4) to said ridges (14a1, 14a2, 14b1, 14b2), the opposite ridges (14a3, 14a4, 14b3, 14b4) being formed in the vicinity of said ridges (14a1, 14a2, 14b1, 14b2).

5. A cover frame as claimed in claim 1, **characterized in that** said at least one support member (13a, 13b) is a bent, bar-like element.

6. A cover frame as claimed in claim 1, **characterized in that** the bearing (15a, 15b) is provided with a friction strong enough to keep said ridge (14a1, 14b1) in place.

7. A cover frame as claimed in claim 1, **characterized in that** the bearing comprises a rubber bearing (15a, 15b) at least partly pressing around said at least one support member (13a, 13b).

8. A cover frame as claimed in claim 1, **characterized in that** it comprises an elongated, flexible member (16a1, 16a2, 16b1, 16b2), such as a wire, attached to the support member (13a, 13b) in order to move the ridge (14a1, 14b1) thereof from the first position into the second position, and vice versa.

9. A cover frame as claimed in claim 1, **characterized in that** said at least one support member is a londitudinal support member (13a, 13b) arranged in the middle area of the cover frame and turnable with respect to the longitudinal axis of the cover frame.

10. A cover frame as claimed in claim 9, **characterized in that** it comprises at least two sequential support members (13a, 13b) arranged between sequentially located transverse support members and provided with said ridge (14a1, 14b1).

11. A cover frame support member, the cover frame supporting a tarpaulin of vehicles, particularly lorries and trailers, and comprising an upper level comprising longitudinal support members and transverse support members, a support member (13a) comprising a ridge (14a1) which can be arranged into a second position with respect to the cover frame where it supports the tarpaulin from below, the plane defined by the ridge being at an angle with respect to the upper level of the cover frame, whereby the ridge protrudes above the upper level of the cover frame, **characterized in that** the support member (13a) comprises a bearing (15) for attaching the support member to the cover frame such that the ridge (14a) is alternatively movable into a first position where the plane defined by the ridge is substantially parallel with respect to the upper level of the cover frame, or into said second position where the ridge protrudes above the upper level of the cover frame, the plane defined by the ridge being at an angle with respect to the upper level of the cover frame.

## Patentansprüche

1. Abdeckungsrahmen zum Abstützen einer Fahrzeugplane, insbesondere für Lastkraftwagen und Anhänger, wobei der Abdeckungsrahmen ein , querlaufende Trägerelemente (9, 10) und längslaufende Trägerelemente (7, 8, 11, 13a, 13b) umfassendes oberes Niveau umfasst, wobei einige der längslaufenden Trägerelemente (7, 8) im Randgebiet des oberen Niveaus und andere (11, 11a, 13b) im mittleren Bereich des oberen Niveaus angeordnet sind, wobei mindestens ein Trägerelement (13a, 13b) eine über das obere Niveau des Abdeckungsrahmens ragende Rippe (14a1, 14b1) umfasst, wenn das Trägerelement in einer Stellung ist, wobei die von der Rippe definierte Ebene einen Winkel in Bezug auf das untere Niveau des Abdeckungsrahmens bildet, **dadurch gekennzeichnet, dass** die Rippe (14a1, 14b1) des Trägerelements mit Hilfe eines Lagers (15a, 17a, 15b, 17b) in eine erste Stellung bewegt werden kann, wobei die von der Rippe definierte Ebene im wesentlichen parallel in Bezug auf das untere Niveau des Abdeckungsrahmens verläuft, oder in die besagte zweite Stellung bewegt werden kann, wobei die Rippe über das untere Niveau des Abdeckungsrahmens ragt und die von der Rippe definierte Ebene einen Winkel In Bezug auf das untere Niveau des Abdeckungsrahmens verläuft.

2. Abdeckungsrahmen nach Anspruch 1, **dadurch gekennzeichnet, dass** das mindestens eine Trägerelement (13a, 13b) eine gegenüberliegende Rippe (14a3, 14b3) umfasst, die in Bezug auf eine Längsachse des Trägerelements in entgegengesetzter Richtung zu einer Rippe (14a1, 14b1) angeordnet ist, so dass die von der entgegengesetzten Rippe definierte Ebene um wesentlichen parallel zu von der Rippe definierten Ebene verläuft.

3. Abdeckungsrahmen nach Anspruch 1, **dadurch gekennzeichnet, dass** die besagte Rippe (14a1, 14b1) in der Nähe eines ersten Endes des Trägerelements (13a, 13b) gebildet ist, und dass eine in derselben Richtung in Bezug auf das Trägerelement ragende Rippe (14a2, 14b2) am in Bezug auf besagtes Ende entgegengesetztem Ende des Trägerelements gebildet ist.

4. Abdeckungsrahmen nach Anspruch 3, **dadurch gekennzeichnet, dass** das mindestens eine Trägerelement (13a, 13b) in Bezug auf besagte Rippen (14a1, 14a2, 14b1, 14b2) gegenüberliegende Rippen (14a3, 14a4, 4b3, 14b4) umfasst, wobei die gegenüberliegenden Rippen (14a3, 14a4, 4b3, 14b4) in der Nähe der besagten (14a1, 14a2, 14b1, 14b2) gebildet sind.

5. Abdeckungsrahmen nach Anspruch 1, **dadurch gekennzeichnet, dass** das mindestens eine Trägerelement (13a, 13b) ein gebogenes, stabähnliches Element ist.

6. Abdeckungsrahmen nach Anspruch 1, **dadurch gekennzeichnet, dass** das Lager (15a, 15b) ein Gummilager mit einer Reibung ist, die stark genug ist, um besagte Rippe (14a1, 14b1) vor Ort zu halten.

7. Abdeckungsrahmen nach Anspruch 1, **dadurch gekennzeichnet, dass** das Lager ein Gummilager (15a, 15b) umfasst, das mindestens teilweise um das mindestens eine Trägerelement (13a, 13b) herum Druck ausübt.

8. Abdeckungsrahmen nach Anspruch 1, **dadurch gekennzeichnet, dass** er ein längliches, flexibles Element (16a1, 16a2, 16b1, 16b2) wie einen am Trägerelement (13a, 13b) befestigten Draht zum Bewegen aus der ersten Stellung in die zweite Stellung und umgekehrt der Rippe dieses Elements umfasst.

9. Abdeckungsrahmen nach Anspruch 1, **dadurch gekennzeichnet, dass** besagtes mindestens eine Trägerelement ein längliches Trägerelement (13a, 13b) ist, das im Mittelbereich des Abdeckungsrahmens angeordnet ist und in Bezug auf die Längsachse des Abdeckungsrahmens drehbar ist.

10. Abdeckungsrahmen nach Anspruch 9, **dadurch gekennzeichnet, dass** er mindestens zwei aufeinanderfolgende Trägerelemente umfasst, die zwischen aufeinanderfolgend gelegenen querlaufenden Trägerelementen angeordnet und besagter Rippe (14a1, 14b1) versehen sind.

11. Trägerelement für Abdeckungsrahmen, wobei der Abdeckungsrahmen eine Fahrzplane insbesondere für Lastkraftwagen und Anhänger trägt und der ein, längslaufende Trägerelemente und querlaufende Trägerelemente umfassendes oberes Niveau umfasst, wobei ein Trägerelement (13a) eine Rippe (14a1) umfasst, die in einer zweiten Stellung in Bezug auf den Abdeckungsrahmen angeordnet sein kann, wobei dieser die Fahrzeugplane von unten trägt, wobei die Rippe über das obere Niveau des Abdeckungsrahmens herausragt, **dadurch gekennzeichnet, dass** das Trägerelement (13a) ein Lager (15) zur Befestigung des Trägerelements am Abdeckungsrahmen umfasst, so dass die Rippe (14) abwechselnd in eine erste Stellung, in der die von der Rippe definierten Ebenen im wesentlichen parallel in Bezug auf das obere Niveau des Abdeckungsrahmens verlaufen, oder in die besagte zweite Stellung in der die Rippe über das obere Niveau des Abdeckungsrahmens herausragt, wobei die von der Rippe definierte Ebene in Bezug auf das obere Niveau des Abdeckungsrahmens abgewinkelt ist, bewegt werden kann.

## Revendications

1. Un cadre de couverture destiné à supporter une bâche pour les véhicules, en particulier pour les camions et les remorques ; le cadre de couverture comprenant un niveau supérieur comprenant des éléments de support transversaux (9, 10) et des éléments de support longitudinaux (7, 8, 11, 13a, 13b) ; quelques-uns des éléments de support longitudinaux (7, 8) étant disposés dans la zone de bord du niveau supérieur et les autres (11, 13a, 13b) étant disposés dans la zone centrale du niveau supérieur ; au moins un élément de support (13a, 13b) comprenant une nervure (14a1, 14b1) faisant saillie au dessus du niveau supérieur du cadre de couverture lorsque l'élément de support est dans une deuxième position ; le plan défini la nervure formant un angle par rapport au niveau supérieur du cadre de couverture, **caractérisé en ce que** la nervure (14a1, 14b1) de l'élément de support peut être bougée de façon alternative au moyen d'un palier (15a, 17a, 15b, 17b) dans une première position où le plan défini par la nervure est essentiellement parallèle par rapport au niveau supérieur du cadre de couverture, ou dans ladite deuxième position où la nervure fait saillie au-dessus du niveau supérieur du cadre de couverture et le plan défini par la nervure formant un angle par rapport au niveau supérieur du cadre de couverture.

2. Un cadre de couverture comme revendiqué dans la revendication 1, **caractérisé en ce que** ledit élément de support (13a, 13b) au moins comprend une nervure opposée (14a3, 14b3) disposée dans la direction opposée à la nervure (14a1, 14b1) par rapport à l'axe longitudinal de l'élément de support de manière à ce que le plan défini par la nervure opposée soit essentiellement parallèle par rapport au plan défini par la nervure.

3. Un cadre de couverture comme revendiqué dans la revendication 1, **caractérisé en ce que** ladite nervure (14a1, 14b1) est formée tout près d'une première extrémité de l'élément de support (13a, 13b) et **en ce qu'**une nervure faisant saillie dans la même direction par rapport à l'élément de support est formée à l'extrémité opposée de ladite extrémité de l'élément de support.

4. Un cadre de couverture comme revendiqué dans la revendication 3, **caractérisé en ce que** ledit élément de support (13a, 13b) au moins, comprend des nervures opposées (14a3, 14a4, 14b3, 14b4) auxdites nervures (14a1, 14a2, 14b1, 14b2) ; les nervures opposées (14a3, 14a4, 14b3, 14b4) étant formées tout près desdites nervures (14a1, 14a2, 14b1, 14b2).

5. Un cadre de couverture comme revendiqué dans la revendication 1, **caractérisé en ce que** ledit élément de support (13a, 13b) au moins est un élément plié en forme de barre.

6. Un cadre de couverture comme revendiqué dans la revendication 1, **caractérisé en ce que** le palier (15a, 15b) est pourvu d'une friction assez forte pour maintenir ladite nervure (14a1, 14b1) en place.

7. Un cadre de couverture comme revendiqué dans la revendication 1, **caractérisé en ce que** le palier comprend un palier à base de caoutchouc (15a, 15b) pressant au moins partiellement autour au moins ledit élément de support (13a, 13b).

8. Un cadre de couverture comme revendiqué dans la revendication 1, **caractérisé en ce qu'**il comprend un élément allongé, flexible (16a1, 16a2, 16b1, 16b2), tel qu'un câble, fixé à l'élément de support (13a, 13b) afin de bouger sa nervure (14a1, 14b1) de la première position vers la deuxième position, et vice versa.

9. Un cadre de couverture comme revendiqué dans la revendication 1, **caractérisé en ce qu'**au moins un élément de support est un élément de support longitudinal (13a, 13b) disposé dans la zone centrale du cadre de couverture et susceptible d'être tourné par rapport à l'axe longitudinal du cadre de couverture.

10. Un cadre de couverture comme revendiqué dans la revendication 9, **caractérisé en ce qu'**il comprend au moins deux éléments de support séquentiels (13a, 13b) disposés entre des éléments de support transversaux disposés de façon séquentielle et pourvus desdites nervures (14a1, 14b1).

11. Un élément de support du cadre de couverture ; le cadre de couverture supportant une bâche de véhicules, en particulier des camions et des remorques, et comprenant un niveau supérieur comprenant des éléments de support longitudinaux et des éléments de support transversaux ; un élément de support (13a) comprenant une nervure (14a1) qui peut être disposée dans une deuxième position par rapport au cadre de couverture où il supporte la bâche du dessous ; le plan défini par la nervure formant un angle par rapport au niveau supérieur du cadre de couverture ; la nervure faisant saillie au-dessus du niveau supérieur du cadre de couverture, **caractérisé en ce que** l'élément de support (13a) comprend un palier (15) destiné à fixer l'élément de support au cadre de couverture de manière à ce que la nervure (14a) puisse être susceptible de tourner de façon alternative dans une première position où le plan défini par la nervure est essentiellement parallèle par rapport au niveau supérieur du cadre de couverture, ou dans ladite deuxième position où la nervure fait saillie au-dessus du niveau supérieur du cadre de couverture ; le plan défini par la nervure formant un angle par rapport au niveau supérieur du cadre de couverture.
